# FASCICULE DE BREVET EUROPEEN

(11) **EP 2 462 361 B1**
(45) Date de publication et mention de la délivrance du brevet: **14.05.2014**
(21) Numéro de dépôt: 10737040.5
(22) Date de dépôt: 23.07.2010
(51) Int. Cl.: F16F 1/32, F16F 3/02

(54) **DISPOSITIF DE PRECONTRAINTE A ACTION RADIALE**
VORSPANNUNGSVORRICHTUNG MIT RADIALER AKTIVITÄT
PRESTRESSING DEVICE HAVING RADIAL ACTIVITY

(30) Priorité: 05.08.2009 FR 0955517
(43) Date de publication de la demande: 13.06.2012
(73) Titulaire: Snecma, 75015 Paris (FR)
(72) Inventeur: BOSTON, Eric, Jacques, F-77240 Cesson (FR); BOURU, Michel, André, F-77950 Montereau sur le Jard (FR); JABLONSKI, Laurent, F-77000 Melun (FR); JOLY, Philippe, Gérard, Edmond, F-77000 Vaux le Penil (FR)
(74) Mandataire: Gevers France
(86) Numéro de dépôt international: PCT/EP2010/060740
(87) Numéro de publication internationale: WO 2011/015473

(56) Documents cités:
- DE-A1- 19 919 414
- JP-A- 59 088 553
- US-A- 2 565 108
- US-A- 5 709 516
- US-A1- 2005 151 310

## Description

La présente invention concerne un dispositif de précontrainte destiné à assurer un contact entre des éléments de roulement et leur piste de roulement.

Elle s'applique en particulier à un rotor d'hélice non carénée pour une turbomachine. Dans ces dispositifs, un écrou est prévu pour appuyer un des paliers sur le rebord d'une couronne. Une rondelle de verrouillage est ensuite prévue entre le palier et l'écrou pour immobiliser en rotation cet écrou dans le logement de l'anneau polygonal.

Un dispositif de précontrainte est ensuite avantageusement prévu pour assurer une contrainte permanente entre les pièces. Comme dispositif de précontrainte, on connaît des dispositifs, tels que des ressorts en forme d'étoile, connus sous le nom rondelle Ringspann. On connaît également des rondelles s'apparentant à la forme des rondelles Belleville. Ces rondelles sont coniques pour assurer une fonction de ressort et ainsi mettre en contrainte permanente les pièces concernées.

Par ailleurs, le document JP 59088553 présente un dispositif de précontrainte comprenant des corps annulaires munis de pattes radiales.

On a pu constater un problème d'usure des pièces en utilisant les dispositifs de précontraintes connus, et en particulier dans des environnements d'ensembles mécaniques soumis à de forts niveaux de vibrations comme par exemple les turbomachines.

L'invention a notamment pour but d'apporter une solution à ce problème.

Elle a pour objet un dispositif de précontrainte permettant de réduire l'usure des pièces devant être soumises à précontrainte dans tous types d'assemblage.

Elle propose à cet effet un dispositif de précontrainte s'étendant autour d'un axe entre un premier plan sensiblement perpendiculaire à l'axe et un deuxième plan sensiblement parallèle au premier plan et axialement décalé par rapport à celui-ci, caractérisé en ce qu'il comprend un premier corps annulaire qui s'étend dans le premier plan avec une première série d'au moins trois pattes s'étendant dans une direction essentiellement radiale, chacune des pattes de la première série comprenant une surface plane s'étendant dans le deuxième plan, il comprend également un deuxième corps annulaire s'étendant dans le premier plan avec une deuxième série d'au moins trois pattes s'étendant dans une direction essentiellement radiale dans un sens opposé à celui de la première série, chacune des pattes de la deuxième série comprenant une surface plane s'étendant dans le deuxième plan.

Selon l'invention, le dispositif n'est donc plus de forme conique mais comprend deux parties sensiblement parallèles qui s'étendent chacune dans un plan perpendiculaire à son axe. Le corps est de forme annulaire et s'étend dans le premier plan. Celui-ci assurera un contact surfacique avec une première pièce, en particulier une rondelle de verrouillage ou un écrou. Les surfaces planes des pattes s'étendent dans le deuxième plan et assurent donc un contact surfacique avec une deuxième pièce, en particulier un des paliers de la turbomachine. Par ces surfaces de contact, l'effort de précontrainte est mieux réparti et on obtient ainsi une diminution significative de l'usure de contact entre les pièces devant être soumises à précontrainte. La durée de vie des pièces concernées est ainsi augmentée.

En particulier, le premier corps annulaire est un corps annulaire intérieur, les pattes de la première série s'étendant vers l'extérieur, le deuxième corps annulaire est un corps annulaire extérieur agencé à s'étendre autour du corps annulaire intérieur, et en ce que les pattes de la deuxième série s'étendent vers l'intérieur. Ainsi, on assure une meilleure répartition radiale de l'effort de précontrainte entre les deux corps annulaires d'une part, et les deux séries de pattes d'autre part.

La distance entre deux pattes successives de chacune des séries est de préférence essentiellement constante. Ceci assure une meilleure répartition sur la circonférence des pièces à mettre en contrainte.

Avantageusement, chacune des pattes comprend une zone inclinée reliant le corps annulaire à la surface plane. Cette zone inclinée se déplace en fonction de la contrainte appliquée.

Une première zone de transition arrondie peut être prévue entre le corps annulaire et la zone inclinée. Une deuxième zone de transition arrondie peut être prévue entre la zone inclinée et la surface plane. Ceci permet d'éviter d'avoir des angles aigus pour faciliter la déformation tout en évitant une concentration de contrainte. De préférence, d'autres arrondis sont également prévus.

Avantageusement, chaque patte a une largeur L et un écartement D est prévu entre deux pattes successives, les valeurs L et D étant déterminées pour que la différence D - L soit située entre 0 et 10 mm, de préférence entre 2 mm et 7 mm. Le nombre de pattes de chacune des séries est avantageusement choisi entre dix et vingt-cinq, et est de préférence supérieur à quinze. On a pu constater qu'en sélectionnant ces valeurs, on optimise la répartition de l'effort de précontrainte.

La présente invention concerne également un rotor, en particulier rotor d'hélice non carénée pour une turbomachine, caractérisé en ce qu'il comprend un dispositif de précontrainte tel que décrit ci-dessus.

L'invention sera mieux comprise et d'autres détails, caractéristiques et avantages de la présente invention apparaîtront plus clairement à la lecture de la description qui suit faite à titre d'exemple non limitatif et en référence aux dessins annexés, dans lesquels :
- la figure 1 est une vue schématique partielle en perspective d'un dispositif de précontrainte suivant l'invention sur un écrou,
- la figure 2 est une vue schématique partielle en perspective du dispositif de la figure 1 placé entre l'écrou et la rondelle de verrouillage d'une part, et un palier d'autre part,
- la figure 3 est une vue schématique en plan de l'élément intérieur du dispositif selon la figure 1, et
- la figure 4 est une vue schématique en plan de l'élément extérieur du dispositif selon la figure 1.

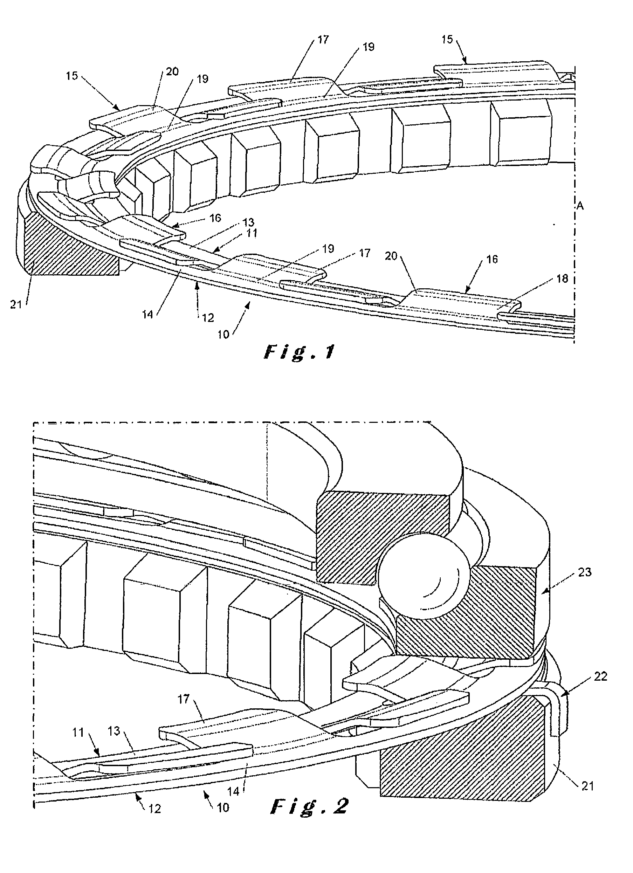

On se réfère d'abord à la figure 1 qui représente un dispositif de précontrainte 10, comprenant un élément intérieur 11 et un élément extérieur 12.

L'élément intérieur 11 comprend un premier corps 13 de forme annulaire. Ce premier corps s'étend dans un premier plan perpendiculaire à l'axe A du dispositif. L'élément intérieur 11 comprend en outre une première série de pattes 15 reliées chacune au premier corps 13 et s'étendant vers l'extérieur dans une direction radiale.

L'élément extérieur 12 comprend un deuxième corps 14 de forme annulaire. Ce deuxième corps s'étend dans le premier plan. L'élément extérieur 12 comprend en outre une deuxième série de pattes 16 reliées chacune au deuxième corps 14 et s'étendant vers l'intérieur dans une direction radiale. L'élément intérieur 11 et l'élément extérieur 12 sont dimensionnés de manière à ce que l'élément intérieur 11 s'emboîte dans l'élément extérieur 12 et que, lorsque le dispositif est monté, une patte d'un des éléments 11, 12 soit situé entre deux pattes de l'autre des éléments 12, 11.

Chaque patte 15, 16 comprend une surface plane 17. Les surfaces planes 17 des pattes 15, 16 s'étendent dans un deuxième plan parallèle au premier plan. La distance entre le premier plan et le deuxième plan est déterminée en fonction de la course souhaitée du dispositif.

Les pattes 15, 16 comprennent chacune en outre une surface inclinée 18 entre la surface plane 17 et le corps annulaire 13, 14. Pour éviter une concentration de contrainte, on a en outre prévu des zones de transition 19 et 20 entre le corps annulaire 13, 14 et la zone inclinée 18 d'une part, et la zone inclinée 19 et la surface plane d'autre part. Avantageusement, ces zones de transition sont arrondies. En outre, toutes les zones et surfaces des pattes comprennent de préférence plusieurs autres zones arrondies permettant d'améliorer la répartition de l'effort de contrainte.

Dans un montage du dispositif de précontrainte représenté en figure 2, on remarque que les éléments intérieurs et extérieurs sont placés entre l'ensemble formé par un écrou 21 et sa rondelle de verrouillage 22 d'une part et un palier 23 (à billes dans l'exemple représenté) d'autre part. La surface inférieure des corps annulaires 13, 14 sont en contact avec la surface supérieure de la rondelle de verrouillage. Les surfaces planes 17 des pattes sont en contact avec la surface inférieure du palier 23. Un véritable contact surfacique entre les différentes pièces est ainsi assuré.

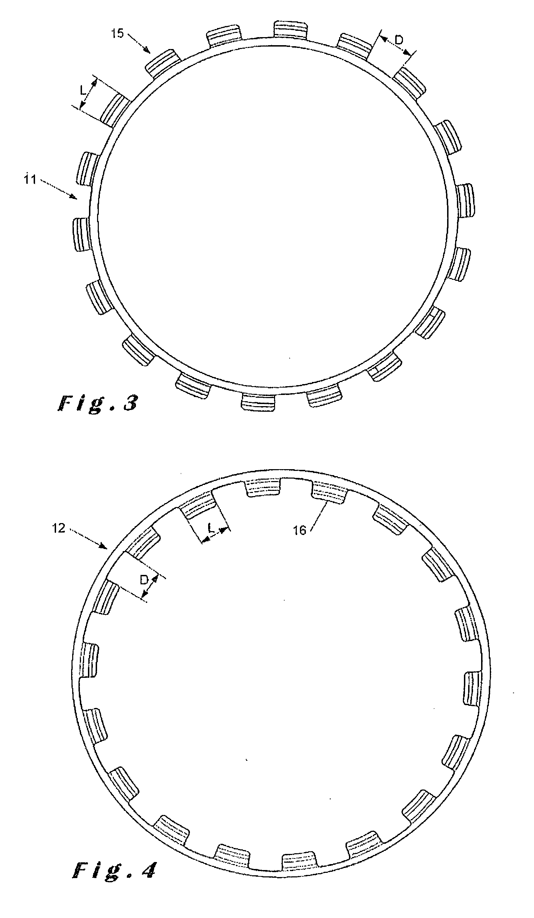

L'élément intérieur 11 (figure 3) et l'élément extérieur 12 (figure 4) du dispositif de précontrainte comprennent chacun, dans l'exemple représenté, une série de 18 pattes. De manière générale, on prévoit entre dix et vingt-cinq pattes par élément, et de préférence au moins quinze pattes.

Chaque patte 15, 16 (figures 3 et 4) a une largeur L qui est égale ou de préférence légèrement inférieure à l'écartement D entre deux pattes, pour assurer un emboîtement entre les éléments intérieur 11 et extérieur 12 lors du montage. En pratique, on a pu constater que la différence entre la distance D et la largeur L doit de préférence être inférieure à 10 mm. Plus particulièrement, elle doit avoir une valeur entre 2 mm et 7 mm. L'écartement D est de préférence le même entre chaque patte.

Dans une variante de réalisation non représentée, le nombre de pattes par élément peut être inférieur à quinze. Il est également concevable de prévoir que le dispositif de précontrainte comprenant uniquement l'élément intérieur 11. De même on peut concevoir un dispositif de précontrainte constitué de l'élément extérieur 12 uniquement.

Le dispositif de précontrainte suivant l'invention a été représenté monté dans un assemblage d'un rotor, qui peut être un rotor d'hélice non carénée pour une turbomachine. Il peut toutefois être utilisé dans d'autres assemblages ou une contrainte permanente est nécessaire. Le dispositif est particulièrement avantageux dans des ensembles mécaniques soumis à de forts niveaux de vibration comme par exemple les turbomachines.

## Revendications

1. Dispositif de précontrainte (10) s'étendant autour d'un axe (A) entre un premier plan sensiblement perpendiculaire à l'axe (A) et un deuxième plan sensiblement parallèle au premier plan et axialement décalé par rapport à celui-ci, et où ce dispositif comprend un premier corps (13) annulaire qui s'étend dans le premier plan avec une première série d'au moins trois pattes (15) s'étendant dans une direction essentiellement radiale, chacune des pattes de la première série comprenant une surface plane (17) s'étendant dans le deuxième plan, **caractérisé en ce qu'**il comprend également un deuxième corps annulaire (14) s'étendant dans le premier plan avec une deuxième série d'au moins trois pattes (16) s'étendant dans une direction essentiellement radiale dans un sens opposé à celui de la première série, chacune des pattes (16) de la deuxième série comprenant une surface plane (17) s'étendant dans le deuxième plan.

2. Dispositif selon la revendication 1, **caractérisé en ce que** le premier corps annulaire (13) est un corps annulaire intérieur, les pattes (15) de la première série s'étendant vers l'extérieur, le deuxième corps annulaire (14) est un corps annulaire extérieur agencé à s'étendre autour du corps annulaire intérieur, et **en ce que** les pattes (16) de la deuxième série s'étendent vers l'intérieur.

3. Dispositif selon l'une des revendications précédentes, **caractérisé en ce que** la distance (D) entre deux pattes successives de chacune des séries est essentiellement constante.

4. Dispositif selon l'une des revendications précédentes, **caractérisé en ce que** chacune des pattes (15, 16) comprend une zone inclinée (18) reliant le corps annulaire (13, 14) à la surface plane (17).

5. Dispositif selon la revendication 4, **caractérisé en ce qu'**une première zone de transition arrondie (19) est prévue entre le corps annulaire et la zone inclinée (18).

6. Dispositif selon la revendication 4 ou 5, **caractérisé en ce qu'**une deuxième zone de transition arrondie (20) est prévue entre la zone inclinée (18) et la surface plane (17).

7. Dispositif selon l'une des revendications précédentes, **caractérisé en ce que** chaque patte (15, 16) a une largeur L et **en ce qu'**un écartement D est prévu entre deux pattes successives, les valeurs L et D étant déterminées pour que la différence entre D et L (D - L) soit située entre 0 et 10 mm, et de préférence entre 2 mm et 7 mm.

8. Dispositif selon l'une des revendications précédentes, **caractérisé en ce que** le nombre de pattes (15, 16) de chacune des séries est compris entre dix et vingt-cinq et de préférence supérieur à quinze.

9. Rotor, en particulier rotor d'hélice non carénée pour une turbomachine, **caractérisé en ce qu'**il comprend un dispositif de précontrainte selon l'une des revendications précédentes.

## Patentansprüche

1. Vorspannungsvorrichtung (10), die sich um eine Achse (A) erstreckt zwischen einer ersten Ebene, die zu der Achse (A) im Wesentlichen lotrecht ist, und einer zweiten Ebene, die zu der ersten Ebene im Wesentlichen parallel und relativ zu dieser axial versetzt ist, und wobei diese Vorrichtung einen ersten ringförmigen Körper (13) umfasst, der sich in der ersten Ebene erstreckt mit einer ersten Reihe von mindestens drei Klauen (15), die sich in einer im Wesentlichen radialen Richtung erstrecken, wobei jede der Klauen der ersten Reihe eine ebene Oberfläche (17) umfasst, die sich in der zweiten Ebene erstreckt, **dadurch gekennzeichnet, dass** sie ferner einen zweiten ringförmigen Körper (14) umfasst, der sich in der ersten Ebene erstreckt mit einer zweiten Reihe von mindestens drei Klauen (16), die sich in einer im Wesentlichen radialen, zu der der ersten Reihe entgegengesetzten Richtung erstrecken, wobei jede der Klauen (16) der zweiten Reihe eine ebene Oberfläche (17) umfasst, die sich in der zweiten Ebene erstreckt.

2. Vorrichtung nach Anspruch 1, **dadurch gekennzeichnet, dass** der erste ringförmige Körper (13) ein innerer ringförmiger Körper ist, wobei sich die Klauen (15) der ersten Reihe nach außen erstrecken, der zweite ringförmige Körper (14) ein äußerer ringförmiger Körper ist, der dafür ausgebildet ist, sich um den inneren ringförmigen Körper zu erstrecken, und dass sich die Klauen (16) der zweiten Reihe nach innen erstrecken.

3. Vorrichtung nach einem der vorhergehenden Ansprüche, **dadurch gekennzeichnet, dass** der Abstand (D) zwischen zwei aufeinanderfolgenden Klauen jeder der Reihen im Wesentlichen konstant ist.

4. Vorrichtung nach einem der vorhergehenden Ansprüche, **dadurch gekennzeichnet, dass** jede der Klauen (15, 16) eine geneigte Zone (18) umfasst, die den ringförmigen Körper (13, 14) mit der ebenen Oberfläche (17) verbindet.

5. Vorrichtung nach Anspruch 4, **dadurch gekennzeichnet, dass** eine erste abgerundete Übergangszone (19) zwischen dem ringförmigen Körper und der geneigten Zone (18) vorgesehen ist.

6. Vorrichtung nach Anspruch 4 oder 5, **dadurch gekennzeichnet, dass** eine zweite abgerundete Übergangszone (20) zwischen der geneigten Zone (18) und der ebenen Oberfläche (17) vorgesehen ist.

7. Vorrichtung nach einem der vorhergehenden Ansprüche, **dadurch gekennzeichnet, dass** jede Klaue (15, 16) eine Breite L hat und dass ein Abstand D zwischen zwei aufeinanderfolgenden Klauen vorgesehen ist, wobei die Werte L und D bestimmt werden, damit die Differenz zwischen D und L (D - L) zwischen 0 und 10 mm und vorzugsweise zwischen 2 mm und 7 mm liegt.

8. Vorrichtung nach einem der vorhergehenden Ansprüche, **dadurch gekennzeichnet, dass** die Anzahl der Klauen (15, 16) jeder der Reihen zwischen zehn und fünfundzwanzig und vorzugsweise mehr als fünfzehn beträgt.

9. Rotor, insbesondere nicht stromlinienförmiger Propellerrotor für eine Strömungsmaschine, **dadurch gekennzeichnet, dass** er eine Vorspannungsvorrichtung nach einem der vorhergehenden Ansprüche umfasst.

## Claims

1. A prestressing device (10) which extends about an axis (A) between a first plane substantially perpendicular to the axis (A) and a second plane substantially parallel to the first plane and axially offset with respect to the latter, and where said device comprises a first annular body (13) which extends within the first plane with a first series of at least three tabs (15) extending in an essentially radial direction, each of the tabs of the first series comprising a planar surface (17) extending within the second plane, **characterized in that** it also comprises a second annular body (14) extending within the first plane with a second series of at least three tabs (16) extending in an essentially radial direction, in the opposite direction from the first series, each of the tabs (16) of the second series comprising a planar surface (17) extending within the second plane.

2. The device as claimed in claim 1, **characterized in that** the first annular body (13) is an inner annular body, the tabs (15) of the first series extending outward, the second annular body (14) is an outer annular body arranged so as to extend around the inner annular body, and **in that** the tabs (16) of the second series extend inward.

3. The device as claimed in one of the preceding claims, **characterized in that** the distance (D) between two successive tabs of each of the series is essentially constant.

4. The device as claimed in one of the preceding claims, **characterized in that** each of the tabs (15, 16) comprises an inclined zone (18) connecting the annular body (13, 14) to the planar surface (17).

5. The device as claimed in claim 4, **characterized in that** a first rounded transition zone (19) is provided between the annular body and the inclined zone (18).

6. The device as claimed claim 4 or 5, **characterized in that** a second rounded transition zone (20) is provided between the inclined zone (18) and the planar surface (17).

7. The device as claimed in one of the preceding claims, **characterized in that** each tab (15, 16) has a width L, and **in that** a spacing D is provided between two successive tabs, the values L and D being determined so that the difference between D and L (D - L) lies between 0 and 10 mm, and preferably between 2 mm and 7 mm.

8. The device as claimed in one of the preceding claims, **characterized in that** the number of tabs (15, 16) of each of the series is between ten and twenty-five and is preferably greater than fifteen.

9. A rotor, in particular an impeller rotor, with no fairing, for a turbine engine, **characterized in that** it comprises a prestressing device as claimed in one of the preceding claims.
